Europäisches Patentamt

European Patent Office

Office européen des brevets

(19)

(11) **EP 1 517 021 A1**

(12) **EUROPEAN PATENT APPLICATION**
published in accordance with Art. 158(3) EPC

(43) Date of publication:
**23.03.2005 Bulletin 2005/12**

(51) Int Cl.⁷: **F02C 3/30**, F02C 6/00,
F02C 9/40, H02J 3/01,
H02J 3/32

(21) Application number: **03761768.5**

(22) Date of filing: **19.06.2003**

(86) International application number:
**PCT/JP2003/007795**

(87) International publication number:
**WO 2004/003362 (08.01.2004 Gazette 2004/02)**

(84) Designated Contracting States:
**AT BE BG CH CY CZ DE DK EE ES FI FR GB GR
HU IE IT LI LU MC NL PT RO SE SI SK TR**

(30) Priority: **26.06.2002 JP 2002186285**

(71) Applicant: **JFE Steel Corporation
Tokyo, 100-0011 (JP)**

(72) Inventor: **Nakagawa, Tsuguhiko
Chiyoda-ku, Tokyo 100-0005 (JP)**

(74) Representative: **Grünecker, Kinkeldey,
Stockmair & Schwanhäusser
Maximilianstrasse 58
80538 München (DE)**

(54) **POWER FLUCTUATION SUPPRESSING METHOD AND POWER GENERATION FACILITY USING SAME**

(57) The present invention provides a method for suppressing power fluctuation of a high-efficiency combined power generation system that uses a byproduct gas generated in a plant, the method including the steps of adding a high-calorific-value substance having a calorific value higher than that of the byproduct gas so as to increase both the total calorie per unit of time and the calorific value per unit gas quantity up to predetermined targets; and adding a low-calorific-value substance having a calorific value lower than that of the byproduct gas so as to control the caloric value and/or the composition of the power generation fuel, whereby the total calorie and the calorific value are controlled within predetermined ranges. The present invention also provides another method for suppressing power fluctuation of a high-efficiency combined power generation system that uses a byproduct gas generated in a plant, the method including a step of alternately switching charge/discharge modes of at least two storage apparatuses to suppress the fluctuation of the power generated, and a power generating facility for these methods. According to the present invention, not only short-term power fluctuation caused inside the plant but also long-term fluctuation are also suppressed. The excess power, whose fluctuation is suppressed, can be controlled to have a power supply pattern coincident with a power demand pattern so that power can be stably supplied to a site outside the plant.

FIG. 11

EP 1 517 021 A1

**Description**

Technical Field

The present invention relates to a method for generating electric power by using byproduct combustible gasses generated through various industrial activities (hereinafter, "byproduct gas") as the fuel for high-efficiency combined power generation within industrial plants and to a power generating facility incorporating the method. In particular, the present invention relates to a method for suppressing short-term power fluctuation and long-term power fluctuation that occur when the generated power is sent outside the plant for industrial and consumer use.

Background Art

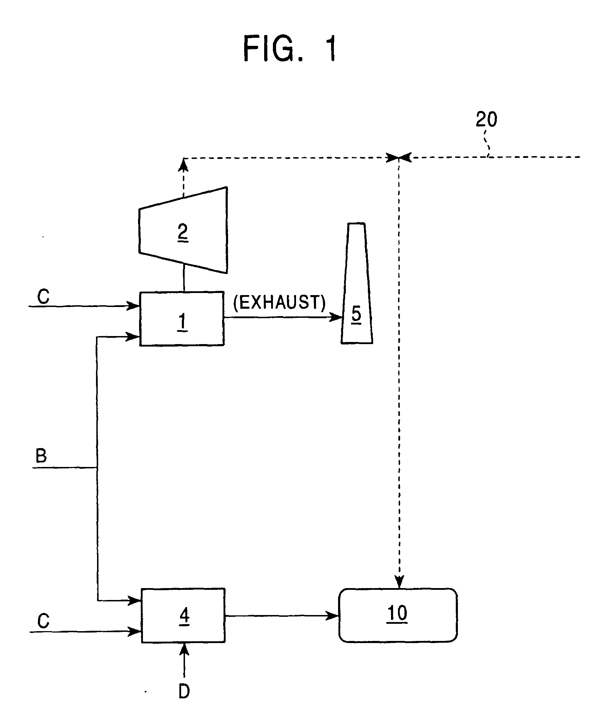

Large-scale industries, such as iron making and petroleum refining, generate large amounts of combustible gasses as the byproduct. Conventionally, as shown in Fig. 1, in order to generate electricity from the byproduct gas produced in a plant such as a steelworks, the byproduct gas, such as a blast furnace gas (B) or a coke-oven gas (C), has been introduced into a steam boiler (1) so that high-pressure steam can be generated inside the steam boiler as a result of combustion of the gas, whereby the steam produced is then used to drive a turbine of a power generator (2) to generate electricity. In the diagram, reference numeral 4 denotes a device for mixing fuel gasses, and reference character D denotes another byproduct gas. Both the generated electricity and electricity purchased from electric power companies are consumed in a steelworks (10).

According to this boiler power generation method, various types of fuel can be used by installing burners most suitable for the fuel type. Thus, in the event that the total calorie per unit of time(hereinafter, "total calorie") of the fuel necessary for producing steam is decreased, the shortfall can be easily compensated with an auxiliary fuel such as crude oil. According to this operation, fluctuation of fuel caused by the byproduct gas can be easily accommodated.

On the other hand, the boiler power generation is disadvantageous in that the energy loss during combustion and generation of steam is large, the generation efficiency (electrical power generated/combustion energy of the supplied fuel) thereby being only about 40% at best.

In order to increase the generation efficiency, high-efficiency combined power generation systems that can achieve a generation efficiency of at least 50% have recently been put to practice (refer to Japanese Unexamined Patent Application Publication Nos. 9-209711 and 2001-292531). Examples of such methods include a gas-turbine steam combined system whereby the combustion energy is recovered through gas turbine power generation while steam generated using the sensible heat of the combustion exhaust gas is used to generate electricity with a steam turbine; and a fuel-cell steam combined system that employs fuel batteries.

In steelworks and the like, the electric power generated by the conventional boiler method is substantially even with the power consumption in the plant. Electricity generated can be increased by approximately 20% without increasing the consumption of the fuel (the byproduct gas) presently used in boiler power generation, if a high-efficiency combined power generation system, such as a gas-turbine steam combined generator and/or a fuel-cell steam combined generator, can be implemented as the power generation system that uses byproduct gasses generated in the plant. The excess electricity generated as such may then be used in other industries or by consumers so that a substantially large energy saving effect can be achieved as a society. For example, an energy-saving effect of 1,000 GWh per year will be achieved by implementing a gas-turbine steam combined power generation system in blast-furnace integrated steelworks whose scale of crude steel production is 8,000,000 t per year. Moreover, if such power generation is employed by all of the blast-furnace integrated steelworks in the country, an energy saving effect of 7,000 GWh per year will be achieved. This figure is as large as 0.7% of the total electricity expected to be generated nationwide in the year 2010. Furthermore, the byproduct gas generated in steelworks contains carbon monoxide, hydrocarbons, and hydrogen; thus, a fuel-cell steam combined power generator may also be employed. According to this technology, a high generation efficiency of approximately 65% is achieved. Thus, significantly large effects will be achieved by applying this technology.

However, there are problems indicated in paragraphs (1) and (2) below that must be overcome in applying high-efficiency combined power generation systems to steelworks and the like.

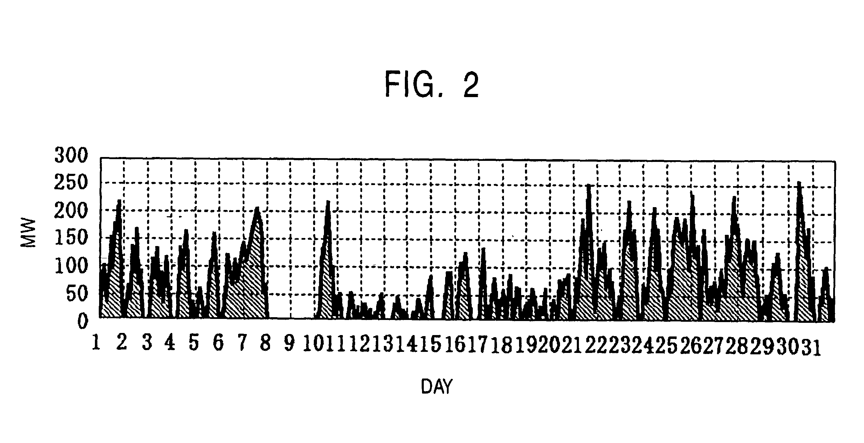

(1) By product gasses of steelworks for power generation are normally residual gasses that had once been used as the fuel of other plant facilities or that had once been sent outside the plant as the fuel gasses. Accordingly, the amount of the byproduct gas generated changes depending not only on operational changes in the source plant but also on changes in power consumption of the plant using the byproduct gas. As a consequence, the calorific value per unit amount of the byproduct gas used for power generation (hereinafter, "calorific value") and the total calorie per unit of time(hereinafter, "total calorie") largely fluctuate in short term in conjunction with these changes. Thus, the power generated naturally undergoes extensive short-term fluctuation. Here, the term "short-term power fluctuation" refers to a fluctuation whose margin is at least 5% of the electricity generated, in which a peak-to-peak fluctuation interval is less than 30 minutes. Changes in power generated by boiler power generation using byproduct gasses of steelworks are shown in Fig. 2. As shown in Fig. 2, the fluctuation of power generation is inevitable. Thus, the calorific value and the total calorie of the fuel used for power generation must be controlled within predetermined ranges.

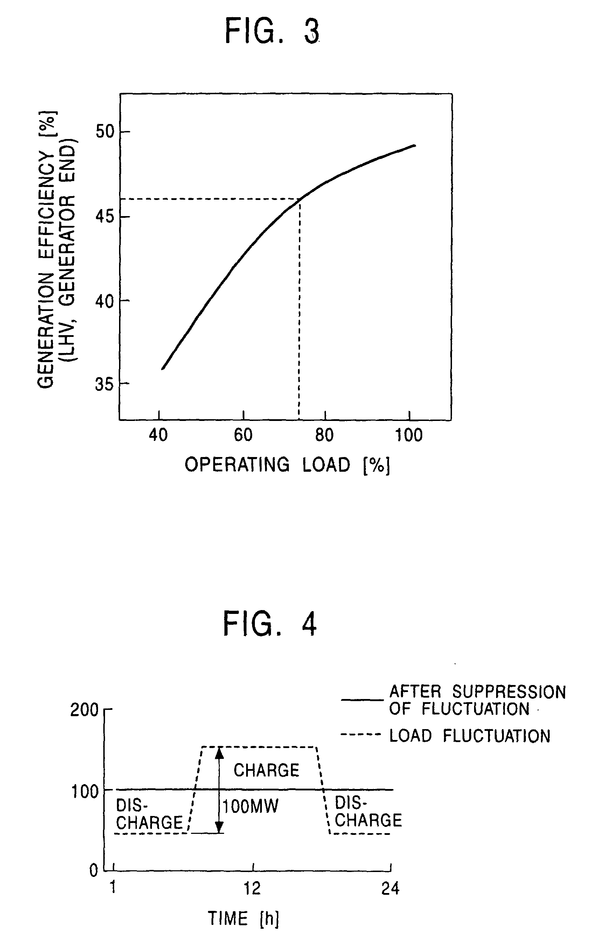

Fig. 3 shows the relationship between the operating load and the generation efficiency when a gas-turbine steam combined power generator is used as a high-efficiency combined power generation system. The graph shows that although the high-efficiency combined power generator achieves high generation efficiency under high operation load, the generation efficiency dramatically drops under low operating load. This is because the percentage of heat losses, such as heat dissipation, increases relative to the input heat as the operation load decreases. Accordingly, in order to maintain high generation efficiency, maintaining high operating load is imperative.

In the gas-turbine steam combined power generation method and the fuel-cell steam combined power generation method, the allowable range of calorific value fluctuation of the fuel gas is ±10% of the target value and is narrow. Moreover, switching from gas fuel to liquid fuel is difficult due to the structure of the system. Thus, the types of fuel usable in these methods are limited.

For the purpose of this application, a generator which undergoes a decrease of 0.4% or more in generation efficiency with a 10% decrease in the operating load is defined as the "high-efficiency combined power generator" based on the aforementioned reasons. Examples of the high-efficiency combined power generator include a gas-turbine steam combined power generator, a fuel-cell steam combined power generator, and a gas-engine steam combined power generator, i.e., a small-scale high-efficiency combined power generation system.

As is previously mentioned, highly efficient power generation can be maintained only when the calorific value and the total calorie of the fuel are supplied stably. Thus, suppression of fluctuation in the calorific value and the total calorie of the fuel for high-efficiency power generation is of the foremost importance.

(2) The short-term fluctuation of the power generated from the byproduct gas is inevitable as described above; however, excess power remaining after being used in other facilities of the plant is normally supplied to a site outside the plant. Thus, the excess power undergoes larger short-term fluctuation and is thus not suitable for retailing or wholesale. In order to effectively utilize the excess power, the load fluctuation must be suppressed. In particular, since excess power is supplied to a site outside the plant, the electric power demand of customers must also be considered from the standpoint of effective use of power. Therefore, a method that can also suppress long-term power fluctuation throughout nighttime and daytime is desired.

For the purpose of this application, the term "long-term power fluctuation" refers to fluctuation whose margin is at least 5% of the electricity generated, in which a peak-to-peak fluctuation interval is at least 30 minutes. In particular, the term refers to differences in demand between nighttime and daytime or to daily differences in electrical power demand. Differences in power demand between nighttime and daytime occur due to living or productive activities of consumers in which more power is consumed during the daytime and less during the nighttime. Daily differences in electrical power demand occur between holidays and business days (the power consumption decreasing on holidays since productive activities stop on holidays) and between hotter days and colder days (operation load fluctuating due to use of air conditioners and the like). Differences are also generated as daily amounts of production are changed.

A method for accommodating the power fluctuation between nighttime and daytime (i.e., storing excess power during the night and discharging the stored power during the day) has been proposed to balance demand and supply, i.e., electricity consumed and electricity generated. According to this method, the fluctuation is accommodated by adjusting the load of the power generator and by employing secondary batteries. However, in employing the high-efficiency combined power generation system using the byproduct gas of the plant, the fluctuation of the byproduct gas caused inside the plant and the like must also be taken into consideration. Furthermore, in order to maintain high power generation efficiency, high load must constantly be placed on the generator, as described above; accordingly, actual operation will heavily rely on secondary batteries. However, in order to completely accommodate the power fluctuation between nighttime and daytime using secondary batteries, secondary batteries with enormously large capacities are required. Use of such secondary batteries is not practicable in view of installation space and cost. For example, as shown in Fig. 4, when there is a difference of 100 MW between the nighttime demand and the daytime demand, a 100 MW (based on 8-hour discharge) secondary battery will be necessary to accommodate the fluctuation. Such a large-capacity secondary battery is huge and is not practicable.

Accordingly, the present invention is directed to a proposal for a method for stably supplying electric power to a site outside the plant by suppressing the short-term power fluctuation that occurs inside the plant when high-efficiency combined power generation is performed using byproduct gas of the plant. Moreover, the present invention also proposes a method for suppressing long-term power fluctuation so as to make the power supply pattern of the electric power sent outside the plant coincident with that of a site outside the plant.

## EP 1 517 021 A1

Disclosure of Invention

In particular, the present invention provides a method for suppressing power fluctuation of a high-efficiency combined power generation system that uses a byproduct gas generated in a plant. The method includes the steps of adding a high-calorific-value substance having a calorific value higher than that of the byproduct gas so as to increase both the total calorie per unit of time and the calorific value per unit gas quantity up to predetermined targets; and adding a low-calorific-value substance having a calorific value lower than that of the byproduct gas so as to control the caloric value and/or the composition of the power generation fuel, whereby the total calorie and the calorific value are controlled within predetermined ranges. Preferably, in the method for suppressing power fluctuation, the high-calorific-value substance is at least one selected from the group consisting of a natural gas, a coke oven gas, and an off-gas from petroleum refinery processes. More preferably, the low-calorific-value substance is at least one selected from the group consisting of a low-calorific value byproduct gas having a calorific value lower than that of the byproduct gas, a gas that, when mixed with the byproduct gas, gives an oxygen concentration of a mixed gas lower than the inflammable limit, a combustion exhaust gas, and an excess nitrogen gas in the plant.

The present invention also provides another method for suppressing power fluctuation of a high-efficiency combined power generation system that uses a byproduct gas generated in a plant. The method includes a step of alternately switching charge/discharge modes of at least two storage apparatuses to suppress the power fluctuation. Preferably, in this method, a high-calorific-value substance having a calorific value higher than that of the byproduct gas is added to increase the power when the power supplied to a site outside the plant is deficient so that the power supply becomes coincident with a demand pattern. Here, the high-calorific-value substance is preferably at least one selected from the group consisting of a natural gas, a coke oven gas, and an off-gas from petroleum refinery processes.

In each of the above-described methods for suppressing power fluctuation, when the power supplied to a site outside the plant is excessive, the excess power is preferably converted into storable energy and stored so that the power supply becomes coincident with a demand pattern. In order to store the excess energy by conversion, the excess power is preferably used to electrolyze water and stored in the form of oxygen and hydrogen. More preferably, the hydrogen gas obtained as such is further converted into at least one selected from the group consisting of methanol and dimethyl ether. The methanol and dimethyl ether produced may be used as the high-calorific-value substance.

In this invention, the byproduct gas used in each method is preferably at least one selected from the group consisting of a blast-furnace gas, a basic oxygen converter gas, and a coke oven gas. Moreover, in each method described above, the high-efficiency combined power generation facility is at least one selected from the group consisting of a gas-turbine steam combined power generator and a fuel-battery steam combined power generator. Furthermore, in each method described above, the deficiency of power that occurs during the time required for a standby generator to start operation upon shutdown of the high-efficiency combined power generation system or during the time required for the shutdown high-efficiency combined power generation system to restart is preferably backed up by the storage apparatus previously charged.

The present invention further provides a power generation facility having a high-efficiency combined power generation system that uses a byproduct gas generated in a plant as the fuel; and an apparatus for adjusting the total calorie and the calorific value of the power generation fuel within predetermine ranges, in which a high-calorific-value substance having a calorific value higher than that of the byproduct gas is used to increase both the total calorie per unit of time and the calorific value per unit gas quantity up to predetermined targets and in which a low-calorific-value substance having a calorific value lower than that of the byproduct gas is used to control the caloric value and/or the composition of the power generation fuel. This power generation facility preferably includes at least two storage apparatuses connected to the facility, wherein the charge mode and the discharge mode of the at least two storage apparatuses are switched alternately.

Preferably, each of the power generation facility described above further includes a system for electrolyzing water connected to the facility.

In the power generation facility described above, the high-efficiency combined power generation system is preferably at least one selected from the group consisting of a gas-turbine steam combined power generator and a fuel-battery steam combined power generator.

Brief Description of the Drawings

Fig. 1 shows a conventional power generation system.

Fig. 2 shows changes in excess power according to the conventional power generation system.

Fig. 3 shows the relationship between the operating load and the generation efficiency of a gas-turbine steam combined power generator.

4

Fig. 4 shows the performance of normal secondary batteries.
Fig. 5 shows the process of suppressing fluctuation of supplied power according to the present invention.
Fig. 6 is a diagram for explaining how excess power is accommodated by secondary batteries.
Fig. 7 shows the shortage of power that occurs when a standby generator is used as the backup.
Fig. 8 is a diagram for explaining how secondary batteries are used.
Fig. 9 is a diagram for explaining how secondary batteries are used.
Fig. 10 is a diagram for explaining how secondary batteries are used.
Fig. 11 shows a system configuration when the present invention is applied to a steelworks.
Fig. 12 shows another system configuration when the present invention is applied to a steelworks.

Best Mode for Carrying Out the Invention

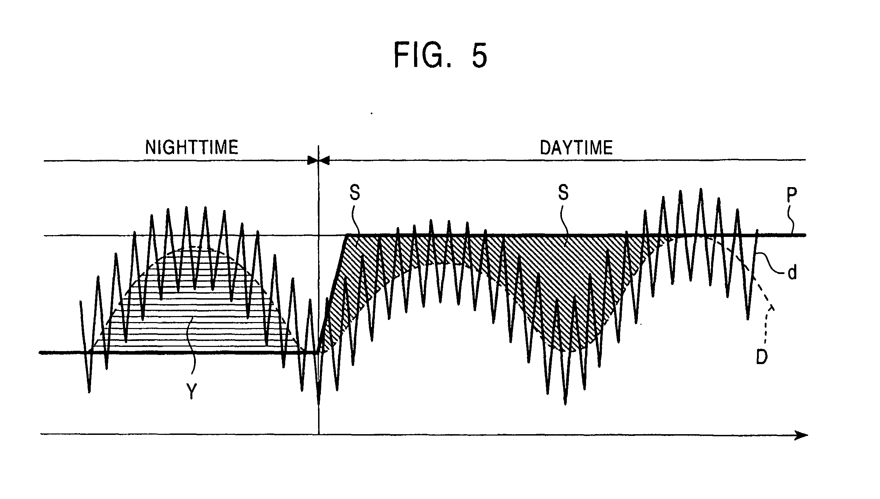

A method according to an embodiment of the present invention will now be described in detail with reference to Fig. 5.

In Fig. 5, changes in excess power in power generation using byproduct gasses are indicated by a double-dotted chain line (d). The excess power is the power generated minus the power demand in the plant. The fluctuation (the amplitude of the double-dotted chain line) is inevitable since it is caused by changes in the amount of the byproduct gas generated and changes in the electrical power demand inside the plant. This fluctuation is approximately $\pm100$ to $\pm150$ MW/min in, for example, a steelworks. Suppression of this fluctuation is vital for adequately supplying power to a site outside the plant.

In this invention, the byproduct gas generated in the plant is used as the fuel of the high-efficiency combined power generating system, and the generated fluctuating power is controlled using two storage devices by alternately switching between the charge mode and the discharge mode. Preferable examples of the storage devices include secondary batteries and capacitors. Moreover, the invention also provides a method for suppressing power fluctuation by converting excess power that exceeds the capacity of the storages into storable energy through electrolysis of water or the like.

In the methods of the invention described below, the byproduct gas used is preferably at least one selected from the group consisting of a blast furnace gas, a basic oxygen converter gas, and a coke oven gas. Moreover, the high-efficiency combined power generating system is preferably at least one selected from the group consisting of a gas-turbine steam combined power generator and a fuel-cell steam combined power generator.

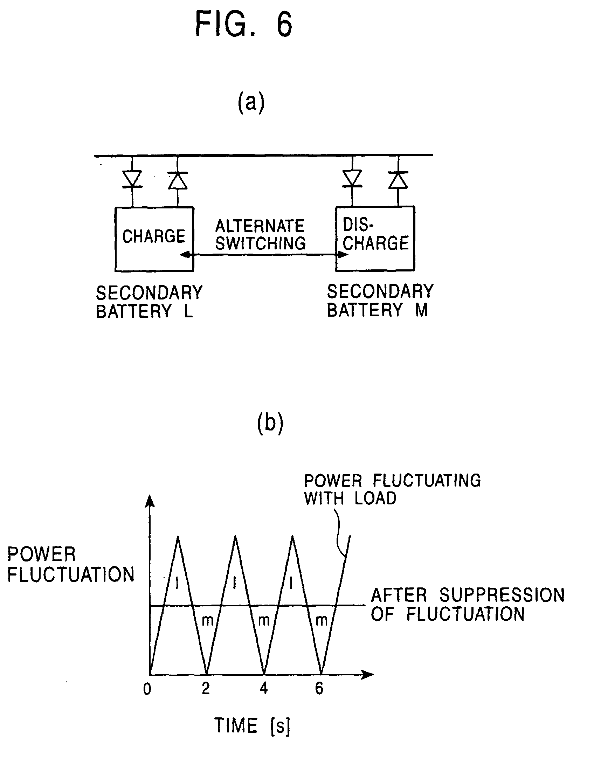

The basic example of suppressing the short-term fluctuation is shown in Fig. 6(a). In particular, at least two secondary batteries as the storage devices, i.e., a secondary battery L for charging and a secondary battery M for discharging, are prepared. The fluctuation (1) at the positive side shown in Fig. 6(b) is accommodated in the secondary battery (L) for charging, and the fluctuation (m) at the negative side is compensated by the power supplied from the (previously charged) secondary battery (M) for discharging. In this manner, the short-term fluctuation is suppressed. As a result, a power supply pattern (D) with smoothed short-term fluctuation indicated by a chain line in Fig. 5 is obtained. The power supply pattern (D) is hereinafter referred to as the "smooth power supply pattern".

From the standpoint of the load-following capabilities of the high-efficiency power generator and of a water electrolysis device for converting electricity into storable energy, the smooth power supply pattern is preferably such that these devices can be driven according to the demand-and-supply pattern. The optimum pattern differs depending on the device used.

Here, two methods for switching between the two storages are conceivable: a method for switching at regular intervals and a method for switching based on the charge state and the discharge state of the storages.

In particular, if the amplitude or the cycle of fluctuation is known in advance, the power for charging can be smoothly balanced with the power for discharging by controlling the power generation load through targeting the median of the fluctuation. However, in reality, fluctuation is often unpredictable, and discharging cannot be balanced with charging by this method in most cases. Thus, according to the method of switching at regular intervals, discharging may end before the required time; moreover, the switching intervals must be set short so as not to exceed the charging capacity, resulting in shortened lifetime of the storages. Therefore, this method is not preferred. When secondary batteries are used as the storages, it is preferable to perform switching according to one of the following:

(i) At the time the charging status of a battery reaches 100% or a predetermined upper limit, the status of the battery is switched from the charging mode to the discharging mode or standby mode. At the same time, if there is a second battery already charged and in standby mode, the mode of the second battery is switched to discharging mode, as required; and
(ii) At the time the charging status of a battery reaches 0% or a predetermined lower limit as a result of discharging, the status of the battery is switched from the discharging mode to the charging mode. At the same time, if there is a second battery already charged and in standby mode, the mode of the second battery is switched to the discharging mode.

Note that the latter method includes a method based on switching at regular intervals with interruptions of switching according to (i) and (ii) above.

Next, as shown in Fig. 5, the obtained smooth supply power pattern (D) does not coincide with the external power demand pattern (P). Since the pattern does not meet the power demand for sale, this pattern is not preferable. In other words, it is essential that the supply power pattern correspond to the power demand pattern of outside sites. The daytime power consumption is naturally higher than the nighttime power consumption. Moreover, the power consumption varies with regions, seasons, and the like. Thus, it is preferable to supply power to an outside site according to the outside power demand pattern while comprehensively considering these factors. As a result, purchase of electricity from electrical power companies and other customers will be stimulated.

As is illustrated in Fig. 5 by the solid line indicating the outside power demand pattern (P) and the broken line indicating the smooth power supply pattern (D), excess and deficiency of the supplied power occur due to the difference between nighttime and daytime. Based on these patterns, it is possible to increase the power supply by increasing the amount of the fuel gas according to the shaded region (S) indicating the power in shortage during the daytime so that the power supply pattern can coincide with the daytime power demand pattern (P). On the other hand, when the nighttime power supply is excessive, the excess power may be converted into storable energy according to the horizontally striped region (Y) indicating the excess power during the nighttime so that the power supply pattern coincides with the nighttime power demand pattern (P). As a result, fluctuation of power supply pattern relative to the outside power demand pattern can be suppressed.

The method for suppressing power fluctuation of the present invention requires conversion of the excess energy into storable energy when the power supply to an outside site is excessive in order to meet with the demand pattern. In order to convert the excess energy, which is produced when the power fluctuation exceeds the capacity of the storage, into storable energy, it is preferable to store the energy in the form of hydrogen and oxygen through electrolysis of water.

According to the electrolysis of water, even the low-value power can be effectively converted into hydrogen gas and oxygen gas. Hydrogen gas and oxygen gas, which are storable energy, are highly valuable gas for industrial use. For example, these gases have been produced using other means and used in steelworks. By using this converting method, excess power, which is produced as a result of fluctuation and has a low value, can be effectively used. In particular, hydrogen gas is expected to be applied as the clean fuel for automobiles; therefore, it is preferable to combine the use of the storages described above with the hydrogen generation by electrolysis of water in designing the method for suppressing the power fluctuation. Note that an electrolysis of water using a solid polymer electrolyte is preferably employed as a highly efficient method.

The hydrogen gas obtained through the electrolysis of water may be converted into at least one of methanol and dimethyl ether and stored.

According to the method combining storage apparatuses and the electrolysis of water, the fluctuation in power to be supplied to the water electrolysis method can be smoothened. This effect can be achieved even when short-term fluctuation of the excess power is large by employing at least two small-capacity storage apparatuses. For example, as shown in Fig. 6 in which a fluctuation of 0 to 100 MW occurs at 2-second cycle, two secondary batteries each having a capacity of 5 MW·8 h are employed. 2.5 MW·8 h of the capacity of each secondary battery is used to accommodate the short-term fluctuation, and the remaining 2.5 MW·8 h of the capacity is used as the switchable storage apparatus. By alternately switching between the discharge mode and the charge mode of these batteries every four minutes, power with 0 to 100 MW short-term fluctuation can be leveled to 50 MW, and the leveled power can be stably supplied to a water electrolysis apparatus.

The optimum capacity of each apparatus should be determined from the past data regarding the degree of short-term fluctuation, the degree of long-term fluctuation, and the fluctuating excess power (particularly that generated during the nighttime) based on the economical efficiency at the time of the investment.

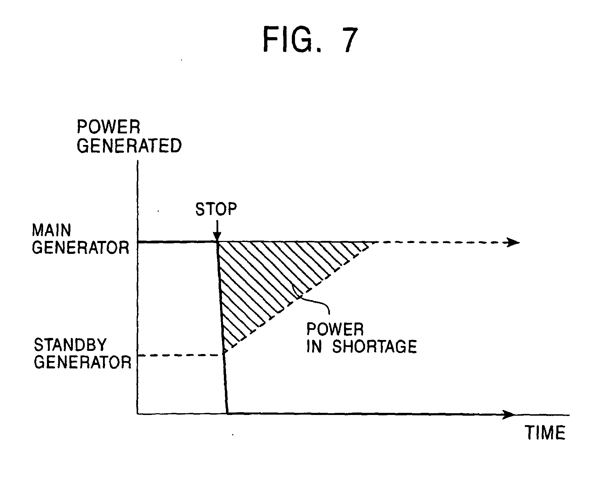

In case the power generator stops in the midst of the operation, a standby power generator may take over the operation. Back-up from the storage apparatus becomes necessary in order to compensate for the shortage of power supply that occurs during the time required for the standby power generator to start operation. In particular, as shown by the shaded region of Fig. 7, when the main generator stops operation, shortage of power occurs during the time required for the standby generator to start steady operation. However, the deficiency can be compensated by the power supplied from the storage, thereby simultaneously achieving suppression of short-term fluctuation of the electricity generated.

The optimum storage capacity that can satisfy two conditions, namely, to suppress short-term fluctuation and to compensate the power deficiency, can be determined as follows. For example, suppose that the margin of the short-term fluctuation is 300 MW at an 8.36 min peak-to-peak interval, that the power reached 0 MW one minute after a 215 MW main power generator stopped operation, and that the load of the standby power generator for backup is to be increased from 85 MW to 200 MW in 20 minutes. Also, suppose that the secondary batteries with 80% charge/discharge efficiency and 20% allowance are used as the storage devices.

[Capacitance of the secondary batteries required to suppress short-term fluctuation]

- · power discharged from the battery: 20.9 MWh
- · power for charging the battery: 26.1 MW/h (=20.9/0.8)
- · battery rated output (8 hour discharge basis): 20.9 MWh/8 = 2.6 MW·8 h
- · battery capacity (since switching between the charge mode and the discharge mode is necessary): 2.6 MW·8 h per battery × 2 = 5.2 MW·8 h.

[During backing-up of the main power generator]

- · power discharged from the battery:: (215 - 85) MW × (20/60) h/0.8 = 54.2 MWh
- · power for charging the battery: 54.2 MWh/0.8 = 67.7 MWh
- · battery rated output (8 hour discharge basis): 54.2 MWh/8 = 6.8 MW·8 h
- · battery capacity: 6.8 MW·8 h

The total capacity of the batteries must be 12 MW·8 h (8 hour discharge basis), i.e., 5.2 MW·8 h (=2.6 MW·8 h per battery × 2) to accommodate the short-term fluctuation and 6.8 MW·8 h to backup the main power generator. However, in this case, 6.8 MW·8 h of the 12 MW·8 h capacity must always be in the charged state.

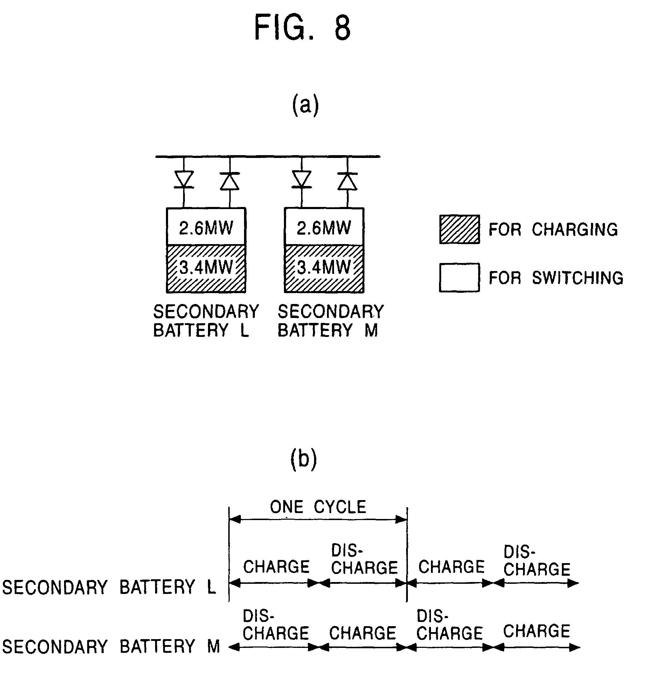

The number of the secondary batteries and the capacity of each battery are determined according to the type. There are typically three types, as shown in Figs. 8 to 10.

Type 1 shown in Fig. 8 has two secondary batteries as the storage devices, and each secondary battery has the function of accommodating the short-term fluctuation and the backup function. The charge/discharge cycle is shown in Fig. 8(b).

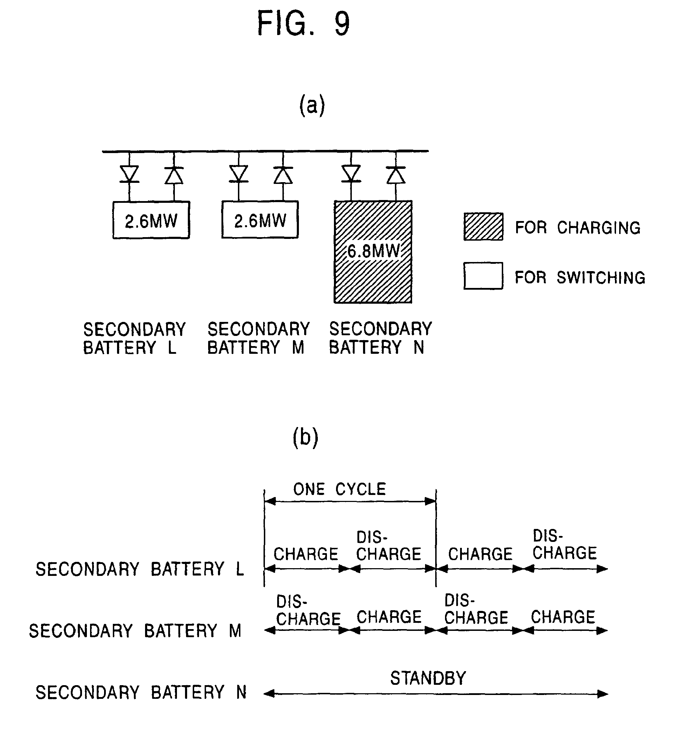

In Type 2 shown in Fig. 9, the short-term fluctuation accommodation function is separated from the backup function. The charge/discharge cycle is shown in Fig. 9(b).

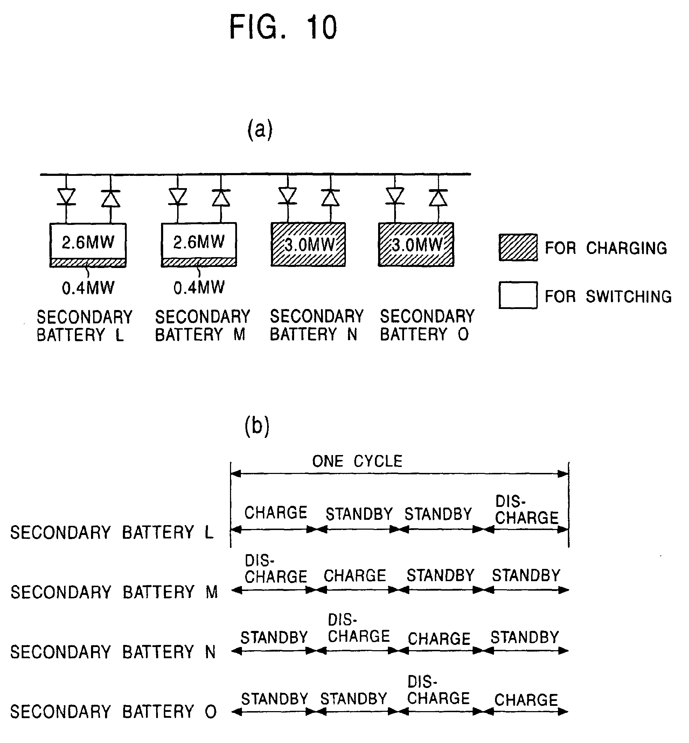

In Type 3 shown in Fig. 10, the number of times of switching is the smallest. The charge/discharge cycle is shown in Fig. 10(b).

The lifetime of the secondary batteries depends on the number of times the charge-discharge switching is performed. Since the number of switching times of Type 3 is one half that of Types 1 and 2, Type 3 is most effective in extending the lifetime of the batteries.

The number of the batteries and the capacity are preferably determined as follows:

(1) required number n of second batteries = the total battery capacity required/the capacity required to accommodate the short-term fluctuation;
(2) the number of the batteries (units) is determined by truncating the fractions below decimal point of the number n; and
(3) battery capacitance = the total battery capacity required/the number of the batteries (units) obtained in (2).

Furthermore, the timing for switching and the method for changing load of the power generator according to the total charge of the secondary batteries are two important factors in operating secondary batteries. The timing for switching has already been described in the previous sections. The remaining factor, i.e., change in load upon the generator in connection with the switching will be explained below.

(i) The load of the power generator is decreased when the total charge relative to the total battery capacity reaches 100% or a predetermined upper limit; and
(ii) The load of the power generator is increased when the total charge relative to the total battery capacity reaches a predetermined lower limit.

In actual operation, limit values, which divide the ranges of (i) and (ii) into several levels, are set so that the load upon the power generator changes gradually. Note that in this example, the generator's load accommodated by the secondary batteries corresponds to the capacity of one battery required for accommodating the short-term fluctuation (i.e., one half the total capacity of the battery required for accommodating the short-term fluctuation). The amount of the generator's load accommodated by the secondary battery is thus 2.6 MW × 8 h/0.5 h = 41.6 MW over 30 minutes, which is 20% of the margin of the load fluctuation of a 200 MW power generator.

When the main power generator stops operation, all batteries are switched to the discharge mode to compensate for the power deficiency until the load of the backup power generator is elevated.

This invention also provides a method for suppressing power fluctuation of a high-efficiency combined power generation system that uses byproduct gasses generated in a plant. In this method, a high-calorific-value substance having a calorific value higher than that of the byproduct gas is added to increase both the total calorie per unit of time and the calorific value per unit gas quantity up to predetermined target values, and a low-calorific-value substance having a calorific value lower than that of the byproduct gas is added to control the calorific value and/or the composition of the power generation fuel. In this manner, the total calorie and the calorific value are controlled within predetermined ranges.

In this invention, substantially all of the plant byproduct gasses whose amount generated and calorific value significantly fluctuate can be used as the fuel for high-efficiency combined power generation. Examples of the high-efficiency combined power generation include gas-turbine steam combined power generation, which can achieve high efficiency but with a large limitation on the fuel for power generator, and fuel-cell steam combined power generation recently proposed. Here, it is essential that the calorific value and the total calorie of the fuel gas be controlled to predetermined targets. In order to do so, when, for example, gas-turbine steam combined power generation using the byproduct gas as the fuel is employed, the fluctuation of fuel total calorie resulting from the fluctuation of the amount of the byproduct gas generated must be controlled. When the fuel-battery steam combined power generation is employed, the fluctuation of the composition of the fuel gas must be controlled.

Note that when the plant has no facility that consumes power or when the plant has a facility whose power consumption is free of short-term fluctuation, the object of the present invention is in some cases achieved by simply suppressing the short-term fluctuation resulting from the fluctuation in the amount of the byproduct gas generated.

First, in order to suppress the fluctuation in the calorific value and the total calorie of the fuel, the measures should be taken according to Table 1. Here, a substance with a higher calorific value and a substance with a low calorific value in comparison with the base byproduct gas are used to control the calorific value (to satisfy the limitation conditions of the power generator operation) and the total calorie (to maintain the operation load of the power generator) within target ranges. Thus, the power fluctuation resulting from these factors can be suppressed within predetermined ranges.

The substance with a high calorific value is preferably at least one gas selected from the group consisting of a natural gas, a coke oven gas, and an off-gas from petroleum refinery processes. More preferably, such a heating gas is liquefied natural gas (LNG), a coke oven gas, or the like. On the other hand, the substance with a low calorific value is preferably at least one gas selected from the group consisting of a byproduct gas having a lower calorific value than the base byproduct gas, a gas such as that makes the oxygen concentration of a mixed gas lower than the inflammable limit when mixed with the base byproduct gas, a combustion exhaust gas, and an excess nitrogen gas in the plant.

For example, the increase in calorie is controlled by selecting the capacity of the power generator so as to avoid $Q_O > Q_{aim}$, wherein

$$Q_{inc} = H_{inc} \times V_{inc}$$

$$Q_O = H_O \times V_O$$

$$Q_{dec} = H_{dec} \times V_{dec}$$

$$H_{dec} < H_O < H_{inc}$$

$$Q_{aim} = Q_{inc} + Q_O + Q_{dec}$$

$$H_{min} \le H_{aim} = (Q_{inc} + Q_O + Q_{dec}) / (V_{inc} + V_O + V_{dec}) \le H_{max};$$

and, if $Q_{dec} = 0$, (i.e., when an inert gas such as $N_2$ and a combustion exhaust gas is used),

$$Q_{inc} = V_{inc} \times H_{inc} = Q_{aim} - Q_O$$

$$V_{inc} = (Q_{aim} - Q_O)/H_{inc}$$

$$V_{dec} = [(Q_{inc} + Q_O) - H_{aim} \times (V_{inc} + V_O)]/H_{aim}$$

wherein, $Q_{inc}$ represents the total calorie of the heating gas (MJ/h), $Q_O$ represents the total calorie of the supplied gas before adjustment (MJ/h), $Q_{dec}$ represents the total calorie of the cooling gas (MJ/h), $Q_{aim}$ represents the target total calorie after adjustment (MJ/h), $H_{inc}$ represents the calorific value of the heating gas (MJ/Nm$^3$), $H_O$ represents the calorific value of the supplied gas before the adjustment (MJ/Nm$^3$), $H_{dec}$ represents the calorific value of the cooling gas (MJ/Nm$^3$), $H_{aim}$ represents the target calorific value after the adjustment (MJ/Nm$^3$) , $H_{min}$ represents the lower limit of the calorific value after the adjustment (MJ/Nm$^3$), $H_{max}$ represents the upper limit of the calorific value after the adjustment (MJ/Nm$^3$), $V_{inc}$ represents the flow of the heating gas (NM$^3$/h), $V_O$ represents the flow of the supplied gas before the adjustment (MJ/NM$^3$) , and $V_{dec}$ represents the flow of the cooling gas (NM$^3$/h). In case $Q_O$ becomes larger than $Q_{aim}$ as a result of short-term fluctuation, a gas holder or the like is used to accommodate the fluctuation.

Note that when the plant produces a plurality of byproduct gasses having different calorific values (e.g., a blast-furnace gas and a coke oven gas in steelworks), the quantitative balance of the fuel gas may be adjusted (for example, by using a large amount of high-calorific-value gasses in the facility that can use such gasses) to produce a low-calorific-value gas for use as the cooling gas.

Moreover, the invention method described above is preferably combined with the method for suppressing long-term power fluctuation whereby at least two storage devices are alternately switched between the charge mode and the discharge mode, as described above. At least one selected from the group consisting of methanol and dimethyl ether, which are produced by converting the hydrogen gas obtained from the electrolysis, may be used as the high-calorific-value substance in the above-described methods for suppressing the power fluctuation.

Moreover, the present invention provides a power generation facility including a high-efficiency combined power generation system that uses a byproduct gas produced in a plant as the fuel and an apparatus for adjusting the total calorie or the calorific value. In this apparatus, a substance having a calorific value higher than the byproduct gas is added to increase the total calorie per unit of time and the calorific value per unit gas quantity of the power generating fuel up to predetermined target values, and a substance having a calorific value lower than the byproduct gas is added to control the calorific value and/or the composition of the power generation fuel, thereby controlling the total calorie and the calorific value within the predetermined ranges before providing the power generation fuel to the power generation system.

Preferably, the power generating facility further includes at least two storage apparatuses connected to the facility so that the charge mode and the discharge mode of the storage apparatuses can be alternately switched. Moreover, each of the above-described power generation facilities preferably includes a system for electrolyzing water. Furthermore, each of the above-described power generation facilities is preferably at least one selected from the group consisting of a gas-turbine steam combined power generator and the a fuel-battery steam combined power generator.

The facility of the present invention will now be described specifically using EXAMPLE below.

EXAMPLE

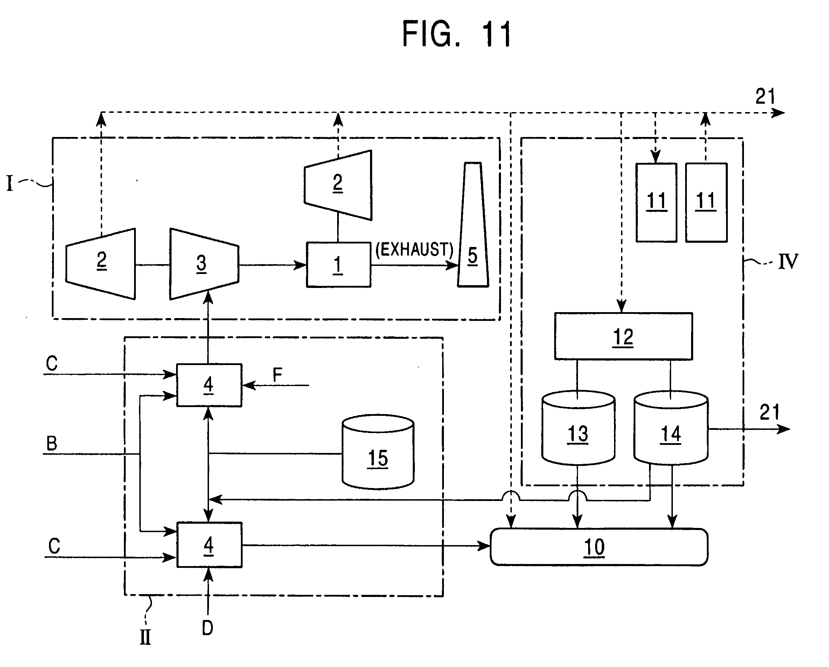

Fig. 11 illustrates an example of applying the present invention to steelworks. In particular, in the example shown in Fig. 11, a gas-turbine steam combined power generation system (I) including a steam boiler (1) and a gas turbine (3) each driving a power generator (2) was used to perform combined power generation. Two 220 MW power generators were installed. The calorific value and the total calorie of the base fuel gas (byproduct gas) used in power generation were 3,980 kJ/Nm$^3$ and 2,760 GJ/h, respectively. Reference numeral 5 in the drawing denotes a flue.

A system (II) for accommodating fluctuation of the fuel gas was constituted from two fuel gas mixers (4) and a LNG holder. Reference character C denotes a coke oven gas, B denotes a blast furnace gas, D denotes another byproduct gas, and F denotes exhaust nitrogen gas (or a combustion exhaust gas) from an oxygen plant. The fluctuation of the fuel was accommodated using a liquefied natural gas (LNG) as the heating fuel gas and an exhaust nitrogen gas from the oxygen plant as the cooling gas. The capacity of each of three LNG holders (15) was 40,000 Nm$^3$, and the maximum amount of the nitrogen gas used was 50,000 Nm$^3$/h.

A power fluctuation suppression system (IV) of a type shown in Fig. 8 that includes two secondary batteries (II) was used. The capacity of each secondary battery was 5 MW-8 h, and the total capacity of a water electrolysis apparatus (12) was 50 MW (hydrogen generation capability: 11,000 Nm$^3$/h; oxygen generation capability 5,500 Nm$^3$/

h). An oxygen gas holder (13) and a hydrogen gas holder (14) were also installed. Reference numeral 10 denotes a steelworks, and 21 denotes outside supply.

The excess power fluctuation, which had been significantly large as shown in Fig. 2, was suppressed by applying the method of the present invention, and a daytime power of 160 MW and a nighttime power of 60 MW were stably supplied. The amount of the LNG used for suppressing the fluctuation of the total calorie and the calorific value of the fuel was 160 GJ/h, i.e., approximately 5.8% of the total calorie of the byproduct gas supplied as the fuel of the generator. Since the heating fuel effectively contributed to the power generation, the power generation efficiency as a whole increased from the conventional 38.7% to 46%, i.e., approximately 20% of energy conservation was achieved.

Note that the fluctuation suppression could not completely accommodate the fuel total calorie, and an average of 32.9 MW of excess electric power (reverse electric power) was generated. The excess power was recovered as hydrogen gas and oxygen gas through the electrolysis; 8,000 $Nm^3/h$ of hydrogen gas and 4,000 $Nm^3/h$ of oxygen gas were obtained as a result.

The cost of the hydrogen gas generated as such was 15 to 30% less than that of hydrogen gas produced by naphtha reforming. Moreover, the hydrogen gas had a high purity and could be used as the environmentally clean energy. For example, the hydrogen gas obtained as such can be directly used as the fuel for future hydrogen gas automobiles and as the ingredient of methanol and dimethyl ether. Moreover, the oxygen can be directly used for steel making.

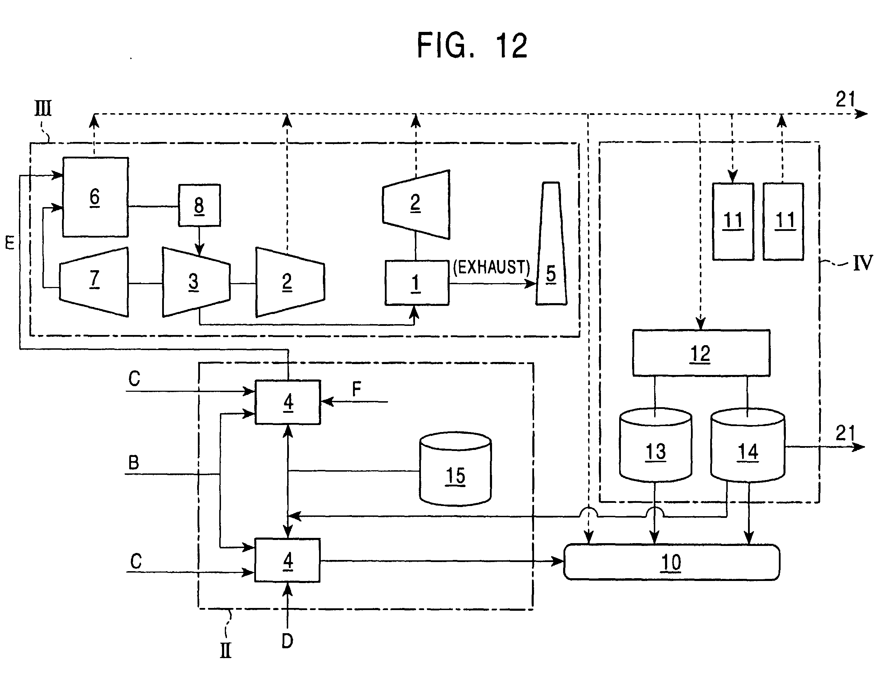

Note that when a fuel-battery steam combined power generator is used instead of the gas-turbine steam combined power generator shown in Fig. 11, the power generation system (I) is replaced with the fuel-battery steam combined power generator (III), as shown in Fig. 12.

In particular, a byproduct gas (E) is supplied to the fuel battery (6) after desulfurization (not shown) if necessary and is reformed into hydrogen and carbon monoxide by a fuel reforming mechanism (not shown) disposed inside the fuel battery. At the same time, these reformed gasses react with oxygen in the air supplied to the fuel battery to generate electricity and hot exhaust gas. In the drawing, an air compressor (7) compresses the air to be supplied to the fuel battery. By compressing air before the air is fed to the fuel battery, the reaction efficiency of the fuel battery is improved, and, at the same time, hot high-pressure exhaust gas (8) can be used to generate electric power using a gas turbine. The waste heat of the gas turbine exhaust recovered by a steam boiler can be used to generate more electric power using the power generator.

Table 1

| | | Total calorific value | | |
|---|---|---|---|---|
| | | Low | Target range | High |
| Calorific value | Low | Addition of high calorific value gas or fuel | Addition of high calorific value gas + excess power generation | Addition of high calorific value gas + excess power generation |
| | Target range | Addition of high calorific value gas or fuel | OK | Excess power generation |
| | High | Addition of high calorific value gas or fuel + (low calorific value gas) | Addition of low calorific value gas | Addition of low calorific value gas + excess power generation |

Industrial Applicability

The present invention can suppress short-term power fluctuation, which is caused by changes in plant operation and which poses a problem in performing high-efficiency combined power generation using byproduct gasses of the plant. Moreover, since the present invention can suppress long-term power fluctuation as well, the excess electric power with suppressed fluctuation can have a power supply pattern sent outside the plant coincident with the power demand pattern, thereby supplying stable power. Since the present invention can be applied to large-scale industries such as steelmaking and petroleum refining, a significantly large energy conservation effect can be achieved.

**Claims**

1. A method for suppressing power fluctuation of a high-efficiency combined power generation system that uses a byproduct gas generated in a plant, the method comprising:

   adding a high-calorific-value substance having a calorific value higher than that of the byproduct gas so as to increase both the total calorie per unit of time and the calorific value per unit gas quantity up to predetermined targets; and
   adding a low-calorific-value substance having a calorific value lower than that of the byproduct gas so as to control the caloric value and/or the composition of the power generation fuel,
   whereby the total calorie and the calorific value are controlled within predetermined ranges.

2. The method for suppressing power fluctuation according to claim 1, wherein the high-calorific-value substance is at least one selected from the group consisting of a natural gas, a coke oven gas, and an off-gas from petroleum refinery processes.

3. The method for suppressing power fluctuation according to claim 1, wherein the low-calorific-value substance is at least one selected from the group consisting of a low-calorific value byproduct gas having a calorific value lower than that of the byproduct gas, a gas that, when mixed with the byproduct gas, gives an oxygen concentration of a mixed gas lower than the inflammable limit, a combustion exhaust gas, and an excess nitrogen gas in the plant.

4. A method for suppressing power fluctuation of a high-efficiency combined power generation system that uses a byproduct gas generated in a plant, comprising

   alternately switching charge/discharge modes of at least two storage apparatuses to suppress the power fluctuation.

5. The method for suppressing power fluctuation according to claim 4, wherein a high-calorific-value substance having a calorific value higher than that of the byproduct gas is added to increase the power when the power supplied to a site outside the plant is deficient so that the power supply becomes coincident with a demand pattern.

6. The method for suppressing power fluctuation according to claim 4, wherein, when the power supplied to a site outside the plant is excessive, the excess power is converted into storable energy and stored so that the power supply becomes coincident with a demand pattern.

7. The method for suppressing power fluctuation according to claim 6, wherein the excess power is used to electrolyze water and stored in the form of oxygen and hydrogen.

8. The method for suppressing power fluctuation according to claim 6, wherein the hydrogen gas obtained in claim 7 is further converted into at least one selected from the group consisting of methanol and dimethyl ether.

9. The method for suppressing power fluctuation according to claim 1, wherein the high-calorific-value substance comprises at least one selected from the group consisting of the methanol and the dimethyl ether converted in claim 8.

10. The method for suppressing power fluctuation according to claim 1 or 4, wherein the byproduct gas comprises at least one selected from the group consisting of a blast-furnace gas, a basic oxygen converter gas, and a coke oven gas.

11. The method for suppressing power fluctuation according to claim 1 or 4, wherein the high-efficiency combined power generation facility comprises at least one selected from the group consisting of a gas-turbine steam combined power generator and a fuel-battery steam combined power generator.

12. The method for suppressing power fluctuation according to claim 1 or 4, wherein the deficiency of power that occurs during the time required for a standby generator to start operation upon shutdown of the high-efficiency combined power generation system or during the time required for the shutdown high-efficiency combined power generation system to restart is backed up by the storage apparatus previously charged.

13. A power generation facility comprising:

   a high-efficiency combined power generation system that uses a byproduct gas generated in a plant as the fuel; and

   an apparatus for adjusting the total calorie and the calorific value of the power generation fuel within predetermine ranges, in which a high-calorific-value substance having a calorific value higher than that of the byproduct gas is used to increase both the total calorie per unit of time and the calorific value per unit gas quantity up to predetermined targets and in which a low-calorific-value substance having a calorific value lower than that of the byproduct gas is used to control the caloric value and/or the composition of the power generation fuel.

14. The power generation facility according to claim 13, further comprising at least two storage apparatuses connected to the facility, wherein the charge mode and the discharge mode of the at least two storage apparatuses are switched alternately.

15. The power generation facility according to claim 13, further comprising a system for electrolyzing water connected to the facility.

16. The power generation facility according to claim 13, wherein the high-efficiency combined power generation system is at least one selected from the group consisting of a gas-turbine steam combined power generator and a fuel-battery steam combined power generator.

# FIG. 1

## FIG. 2

# FIG. 3

# FIG. 4

# FIG. 5

# FIG. 6

## (a)

CHARGE

ALTERNATE
SWITCHING

DIS-
CHARGE

SECONDARY
BATTERY L

SECONDARY
BATTERY M

## (b)

POWER FLUCTUATING
WITH LOAD

POWER
FLUCTUATION

AFTER SUPPRESSION
OF FLUCTUATION

l    l    l

m    m    m

0    2    4    6

TIME [s]

# FIG. 7

# FIG. 8

(a)

|  | FOR CHARGING |
|  | FOR SWITCHING |

(b)

# FIG. 9

## (a)

2.6MW   2.6MW   6.8MW

▨ FOR CHARGING

☐ FOR SWITCHING

SECONDARY   SECONDARY   SECONDARY
BATTERY L    BATTERY M    BATTERY N

## (b)

ONE CYCLE

SECONDARY BATTERY L  | CHARGE | DIS-CHARGE | CHARGE | DIS-CHARGE

SECONDARY BATTERY M  | DIS-CHARGE | CHARGE | DIS-CHARGE | CHARGE

SECONDARY BATTERY N  | STANDBY

# FIG. 10

(a)

2.6MW  2.6MW  3.0MW  3.0MW

0.4MW  0.4MW

SECONDARY  SECONDARY  SECONDARY  SECONDARY
BATTERY L  BATTERY M  BATTERY N  BATTERY O

FOR CHARGING

FOR SWITCHING

(b)

ONE CYCLE

| | CHARGE | STANDBY | STANDBY | DIS-CHARGE |
| SECONDARY BATTERY L | | | | |

| | DIS-CHARGE | CHARGE | STANDBY | STANDBY |
| SECONDARY BATTERY M | | | | |

| | STANDBY | DIS-CHARGE | CHARGE | STANDBY |
| SECONDARY BATTERY N | | | | |

| | STANDBY | STANDBY | DIS-CHARGE | CHARGE |
| SECONDARY BATTERY O | | | | |

# FIG. 11

EP 1 517 021 A1

FIG. 12

## INTERNATIONAL SEARCH REPORT

| International application No. |
| --- |
| PCT/JP03/07795 |

| A. CLASSIFICATION OF SUBJECT MATTER |
| --- |
| Int.Cl$^7$  F02C3/30, F02C6/00, F02C9/40, H02J3/01, H02J3/32 |
| According to International Patent Classification (IPC) or to both national classification and IPC |

| B. FIELDS SEARCHED |
| --- |
| Minimum documentation searched (classification system followed by classification symbols) |
| Int.Cl$^7$  F02C3/30, F02C6/00, F02C9/40, F01K23/10, F01K27/02, H02J3/01, H02J3/32, H02P9/40 |

Documentation searched other than minimum documentation to the extent that such documents are included in the fields searched

| | | | |
| --- | --- | --- | --- |
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 2001-182553 A (Kawasaki Steel Corp.), 06 July, 2001 (06.07.01), | 1-3,10,11, 13,16 |
| A | Fig. 4; page 8, left column, lines 14 to 40 (Family: none) | 4-9,12,14,15 |
| Y | JP 2-16039 Y1 (Kawasaki Steel Corp.), 01 May, 1990 (01.05.90), | 1-3,10,11, 13,16 |
| A | Fig. 1 (Family: none) | 4-9,12,14,15 |
| Y | JP 10-288049 A (Hitachi, Ltd.), 27 October, 1998 (27.10.98), | 1-3,10,11, 13,16 |
| A | Claim 3; page 5, right column, lines 22 to 47 (Family: none) | 4-9,12,14,15 |

| ☒ Further documents are listed in the continuation of Box C. | ☐ See patent family annex. |
| --- | --- |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 September, 2003 (24.09.03) | 07 October, 2003 (07.10.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/07795 |

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | JP 7-4267 A  (Hitachi, Ltd.),<br>10 January, 1995 (10.01.95),<br>Page 8, right column, lines 13 to 30<br>(Family: none) | 1-3,10,11,<br>13,16<br>4-9,12,14,15 |
| Y<br>A | JP 2-40417 A  (Central Research Institute of<br>Electric Power Industry),<br>09 February, 1990 (09.02.90),<br>Page 4, lower right column, line 17 to page 5,<br>upper left column, line 3<br>(Family: none) | 1,3<br>2,4-16 |
| Y<br>A | JP 5-18265 A  (Hitachi, Ltd.),<br>26 January, 1993 (26.01.93),<br>Page 6, left column, lines 30 to 50<br>(Family: none) | 1,3<br>2,4-16 |
| Y<br>A | JP 8-140285 A  (Hitachi, Ltd.),<br>31 May, 1996 (31.05.96),<br>Page 4, left column, lines 30 to 39<br>(Family: none) | 4,14<br>1-3,5-13,15,<br>16 |
| A | JP 2000-341860 A  (Nissin Electric Co., Ltd.),<br>08 December, 2000 (08.12.00),<br>Full text<br>(Family: none) | 4,14 |
| Y<br>A | JP 2000-2790 A  (Toshiba Corp.),<br>07 January, 2000 (07.01.00),<br>Figs. 16, 17; page 12, right column, line 30 to<br>page 25, left column, line 36<br>(Family: none) | 6-8,15<br>1-4,5,9-14,<br>16 |
| Y<br>A | JP 11-72028 A  (Mitsubishi Heavy Industries, Ltd.),<br>16 March, 1999 (16.03.99),<br>Page 6, left column, lines 30 to 50<br>(Family: none) | 6,7,15<br>1-5,8-14,16 |
| Y<br>A | EP 0400701 A  (TURBOCONSULT B.V.),<br>14 May, 1990 (14.05.90),<br>Full text<br>& US 5083425 A          & JP 3-18627 A | 11,16<br>1-10,12-15 |
| Y<br>A | JP 8-261014 A  (Mitsubishi Heavy Industries,<br>Ltd.),<br>08 October, 1996 (08.10.96),<br>Full text<br>(Family: none) | 11,16<br>1-10,12-15 |
| Y<br>A | JP 2000-48844 A  (Mitsubishi Heavy Industries,<br>Ltd.),<br>18 February, 2000 (18.02.00),<br>Full text<br>(Family: none) | 11,16<br>1-10,12-15 |

Form PCT/ISA/210 (continuation of second sheet) (July 1998)

## INTERNATIONAL SEARCH REPORT

| International application No. |
| --- |
| PCT/JP03/07795 |

**Box I   Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:

 The technical feature common to claims 1, 4 is "to generate power using the by-product gas produced in a plant as the fuel of a high-efficiency combined cycle power generation".
 However, the common technical feature is a well-known technique and not novel without any need to specifically cite a prior art document. Consequently, this common technical feature cannot be a special technical feature within the meaning of PCT Rule 13.2, second sentence. Since there exists no other common feature which can be considered as a special technical feature within the meaning of PCT Rule 13.2,
 (continued to extra sheet.)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

 ☐ No protest accompanied the payment of additional search fees.

Form PCT/ISA/210 (continuation of first sheet (1)) (July 1998)

## INTERNATIONAL SEARCH REPORT

| International application No. |
| --- |
| PCT/JP03/07795 |

Continuation of Box No. II of continuation of first sheet (1)

second sentence, no technical relationship within the meaning of PCT Rule 13 between the different inventions can be seen. Consequently, it appears that claims 1, 4 do not satisfy the requirement of unity of invention.

Claims 1, 13 satisfy the requirement of unity of invention.

Form PCT/ISA/210 (extra sheet) (July 1998)